# EUROPEAN PATENT SPECIFICATION

(11) **EP 2 394 085 B1**
(45) Date of publication and mention of the grant of the patent: **15.01.2020**
(21) Application number: 10738815.9
(22) Date of filing: 02.02.2010
(51) Int. Cl.: H02G 3/22, F16L 5/08

(54) **STRUCTURE FORMED OF MULTIPLE PIPE OR CABLE LEAD-THROUGH BLOCKS**
STRUKTUR AUFGEBAUT AUS EINER VIELZAHL VON ROHR- ODER KABELDURCHFÜHRUNGSBLÖCKEN
STRUCTURE FORMÉE DE PLUSIEURS BLOCS DE PASSAGE DE TUYAUX OU DE CÂBLES

(30) Priority: 04.02.2009 SE 0950039
(43) Date of publication of application: 14.12.2011
(73) Proprietor: Roxtec AB, 371 23 Karlskrona (SE)
(72) Inventor: ANDERSSON, Jens, S-370 23 Hasslö (SE); ERICSON, Mats, S-374 51 Asarum (SE); FILIPSEN, Jenny, S-371 31 Karlskrona (SE); HILDINGSSON, Ulf, S-370 24 Nättraby (SE); LUNDBORG, Christer, S-371 32 Karlskrona (SE); MILTON, Stefan, S-373 02 Ramdala (SE); PETTERSSON, Ronnie, S-373 00 Jämjö (SE); ÅKESSON, Jörgen, S-371 94 Lyckeby (SE)
(74) Representative: Ström & Gulliksson AB
(86) International application number: PCT/SE2010/050118
(87) International publication number: WO 2010/090584

(56) References cited:
- WO-A1-03/062689
- WO-A1-2005/057749
- WO-A1-2007/094736
- WO-A1-2007/094736
- WO-A1-2007/139506
- DE-A1- 4 434 202
- DE-U1- 8 620 941
- SE-C2- 531 217
- US-A- 4 199 070

## Description

### Technical Field

The present invention concerns cable, wire or pipe transitions or lead-through placed in blocks, which blocks may be attached to each other to form different structures. The blocks have peelable sheets for adaption to an outer diameter of a cable, wire or pipe to be received.

### Prior Art

The cable, wire or pipe transitions are to receive the cables, wires or pipes in a sealed way.

Cable, wire or pipe transitions are used for sealing in many different environments, such as for cabinets, technical shelters, junction boxes and machines. They are used in different industrial environments, such as automotive, telecom, power generation and distribution, as well as marine and offshore. The transitions often include modules, which may have to seal against fluid, gas, fire, rodents, termites, dust, moisture etc., and may receive cables or wires for electricity, communication, computers etc., pipes for different gases or liquids such as water, compressed air, hydraulic fluid and cooking gas or wires for load retention.

It is previously known to have different types of modules for cable or pipe penetrations. The modules normally made of an elastic material are often placed inside a frame together with some kind of compression means. The compression means is used to compress the modules around respective cable or pipe to give a sealing around the cable or pipe. In some of the modules a package of peelable sheets or layers are arranged in an opening to receive the cable or pipe. By means of the peelable sheets the inner diameter of the opening of the module may be adapted to the outer diameter of the cable or pipe. Thus, the same module may be used for a range of diameters of cables or pipes.

WO 2007/094736 A1 and WO 03/062689 A1 both show examples of solutions where modules for cable or pipe penetration are placed inside a frame together with a compression unit.

WO 2007/139506 A1 shows a plug unit for a cable entry, which plug unit is to plug an opening in a wall. The plug unit is formed of two parts that are to be interconnected around a cable or pipe.

DE 86 20 941 U1 shows a connecting element for connection of separate elements of cable entry plates or the like. The connecting element is provided to be inserted in grooves of the separate elements to be connected.

### Summary of the Invention

The dimensions of openings of walls of different kinds, through which openings cables or pipes are to be lead in a sealed way, may vary. Furthermore the demands of the sealing may vary depending on field of application. One general ambition in all design is to keep the costs for manufacture, storing and transport as low as possible at the same time as the products must fulfil the intended functions.

By having cable or pipe penetrations in form of blocks different wall structures may be formed adapted to the dimensions of a formed opening in a wall of some kind. By means of the present invention a structure may be formed by means of a few standard components, which standard components can be adapted to different dimensions on cables or pipes to be received and different dimensions on an opening receiving the structure. Normally, no outer compression means is used together with the blocks of the present invention. The blocks may be brought together before installation inside a frame or the like, whereby the blocks are placed inside the frame as one single unit. This facilitates installation.

According to the present invention a structure is formed of a number of blocks, as stated in claim 1. Further embodiments of the invention are given in the dependent claims.

Further objects and advantages of the present invention will be obvious to a person skilled in the art reading the detailed description below of at present preferred embodiments.

### Brief Description of the Drawings

The invention will be described further below by way of example and with reference to the enclosed drawings. In the drawings:
Fig. 1 is a perspective view of a structure wall formed of a number of blocks according to the present invention,
Fig. 2 is a perspective view from above of one example of a block according to the present invention,
Fig. 3 is a perspective view from below of the block of Fig. 2,
Fig. 4 is a perspective view from above of a further example of a block according to the present invention,
Fig. 5 is a perspective view from below of a still a further example of a block according to the present invention,
Fig. 6 is an end view of the block of Fig. 5,
Fig. 7 is a perspective view from above of a further example of a block according to the present invention,
Fig. 8 is a perspective view of a one example of a frame to be used with blocks according to the present invention, and
Figs. 9-12 are perspective views of yet further examples of blocks according to the present invention.

### Detailed Description of Preferred Embodiments

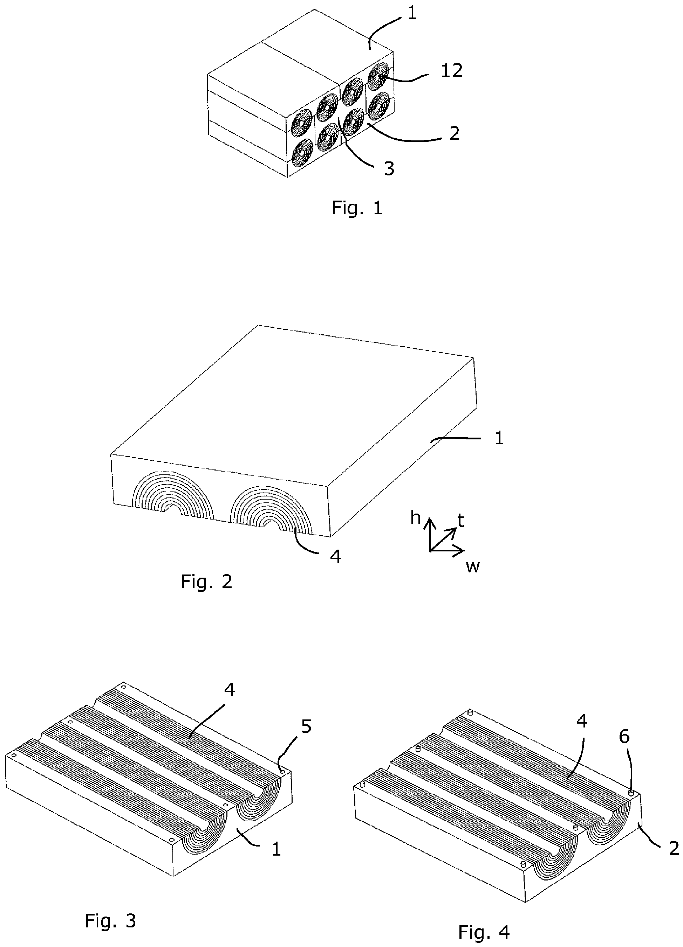

As used in this description and for ease of description the expressions "upper", "lower", "top", "bottom" and similar expressions are normally in view of the Figs. referred to, or in view of the normal orientation at use. However, a person skilled in the art realises that the blocks of the present invention may have any orientation at use. As used in this description the terms "height", "width" and "thickness" are used in connection with the blocks and the formed wall in directions as indicated with h, w and t, respectively, in Fig. 2.

By means of a number of blocks 1, 2, 3 according to the present invention it is possible to form different wall structures having a number of cable, wire or pipe transitions.

In one embodiment the blocks 1, 2, 3 are of three general types. One upper block 1 and one lower block 2 is to be placed at the top and bottom, respectively, of the formed structure. Between the upper and lower blocks 1, 2 one or more layers of intermediate blocks 3 are placed in the structure. The blocks 1, 2, 3 are normally made of a relatively rigid polymeric material. In some embodiments the blocks 1, 2, 3 are made of a relatively elastic polymeric material.

The upper block 1 of Figs. 2 and 3 has a generally rectangular shape. In the middle of the lower surface of the upper block 1, two central semicircular recesses, as seen in cross section, are formed receiving a number of peelable sheets 4 or layers. The semicircular recesses extend all of the thickness of the upper block 1. The upper surface of the upper block 1 is even. On the lower side of the upper block 1 a number of openings 5 are placed for co-operation with protruding parts in the form of bosses 6 of a block placed below the upper block 1 in use.

The lower block 2 of Fig. 4 has a generally rectangular shape. In the middle of the upper surface of the lower block 2, two semicircular recesses are formed receiving a number of peelable sheets 4 or layers. The semicircular recesses extend all of the thickness of the lower block 2. On the upper surface of the lower block 2 a number of protruding parts or bosses 6 are formed. The bosses 6 are to co-operate with openings 5 of one or more blocks placed above the lower block in use, to hold the blocks together.

Normally, the lower surface of the lower block 2 is an even continuous surface, having no openings.

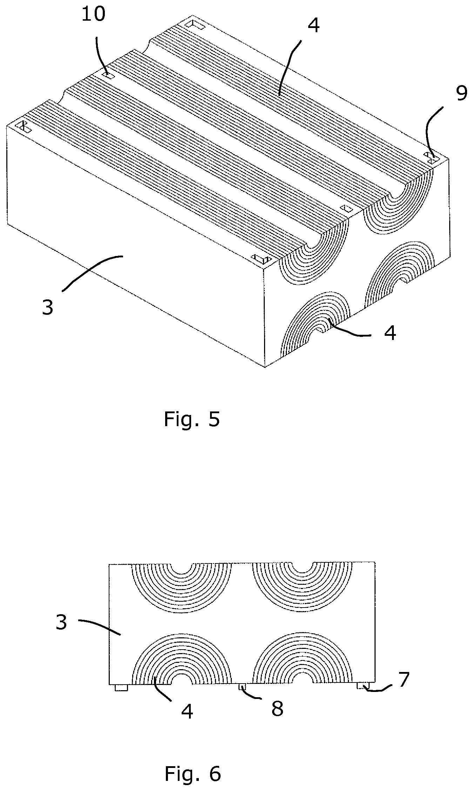

When used with the upper and lower blocks 1, 2 of Figs. 2-4, the intermediate blocks 3 have bosses and openings for co-operation with the openings 5 and bosses 6 of the upper blocks 1 and lower blocks 2, respectively. The intermediate block 3 of Figs. 5 and 6 has a generally rectangular shape. In the middle of each of the lower and upper surfaces, respectively, of the intermediate block 3, semicircular recesses are formed receiving a number of peelable sheets 4 or layers. The semicircular recesses extend all of the thickness of the block 3.

In the embodiments of Figs. 5, 6 and 7 an alternative form of the parts connecting the different blocks 3, 11 are shown. On the upper surface of the blocks 3, 11 a number of protruding parts 7, 8 are formed and on the lower surface of the blocks 3, 11 a number of corresponding openings 9, 10 are formed. The protruding parts 7, 8 and openings 9, 10 are to co-operate with openings 9, 10 and protruding parts 7, 8, respectively, of blocks placed in a layer above or below the shown blocks 3, 11.

In the embodiment of Figs. 5-7 the protruding parts 7 at the corners each has two straight parts forming a right angle, thus, the protruding parts 7 and corresponding openings 9 show an L-form in plan view. On two opposite sides of each block further protruding parts 8 are arranged between the protruding parts 7 at the corners. Said further protruding parts 8 are to be received in corresponding openings 10 at a block to be placed above the block having the further protruding parts 8. Said further protruding parts 8 and corresponding openings 10 have only one straight part. The protruding parts 7, 8 of a first block are to be received in openings 9, 10 of a second block placed on top of the first block.

A person skilled in the art realises that the connection between blocks placed on top of each other may be accomplished in many different ways. For instance the protruding parts and corresponding openings may have other forms than shown.

All protruding parts on one block and corresponding co-operating parts or openings of an adjacent block have complementary forms, independently of the exact form of the protruding parts and co-operating parts. The protruding parts are received in a tight fit in the co-operating parts. Thus, the blocks are held together by means of the tight fit between the protruding parts and the co-operating parts.

As indicated in Fig. 1 the blocks may have different number of recesses receiving peelable sheets 4. The recesses are evenly distributed on the blocks 1-3, 11. A person skilled in the art realises that the number of recess may vary in principle without limitation. Thus, a block, being an upper, lower or intermediate block, may have one, two, three, four, five etc. recesses on one surface.

By the co-operation through the tight fit between the bosses 6 and protruding parts 7, 8, respectively, and openings 5, 9, 10 of different blocks 1-3, 11, the blocks 1-3, 11 are held together forming a wall structure. By placing a number of blocks 1-3, 11 mutually adjacent each other and above each other a wall structure may be formed, comprising vertical and horizontal rows of blocks 1-3, 11.

The blocks 1-3, 11 used to form a single wall structure should each have the same height and thickness but may have different widths as indicated above. To form a stable wall structure blocks of different widths are used in such a way that contact surfaces between two separate blocks 1-3, 11 are not placed on a continuous vertical line going through all of the formed wall structure. Such a continuous non-interrupted vertical line will give rows of blocks 1-3, 11 that are not attached to adjacent rows of blocks 1-3, 11.

The blocks 1-3, 11 may have further features in other embodiments as shown in the simultaneously filed applications entitled "A pipe or Cable Lead-Through having a Part Indicating Compression", "A Module of a Pipe or Cable Lead-Through having Grooves on Opposite Sides", "Modules of Pipe or Cable Lead-Through Sticking Together", "A Pipe or Cable Lead-Through having Modularized Modules", "A Pipe or Cable Lead-Through having Penetrateable Modules", "Lubrication of a Pipe or Cable Lead-Through" and "A Pipe or Cable Lead-Through having Modules with a Dimensioning Function", filed by the applicant of the present application.

The semicircular recesses of the blocks are placed in such a way that when blocks are put together to form a wall, circular recesses are formed of two semicircular recesses of blocks 1-3, 11 placed on top of each other. In the middle of the peelable sheets 4 of each circular recess a blind 12 is placed. The blinds 12 are normally fixed by adhesive to the peelable sheets 4 on either the upper or lower sides of each block 1-3, 11. The blind 12 is taken away when a cable or pipe is to be received in the recess. The recess may be placed eccentrically in the same way as shown in the simultaneously filed application entitled "Eccentric Part of a Pipe or cable Lead-Through", filed by the applicant of the present application.

The sheets 4 of each block adhere enough to each other to stick together but at the same time loose enough to be peeled off by hand. The same goes for the blinds 12.

Normally the sheets 4 are peeled off one by one but it is also possible to peel off a larger number of sheets 4 at the time. The sheets 4 are made of an elastic polymeric material.

The sheets may be arranged in many different ways and with different features as reflected in the simultaneously filed applications entitled "A pipe or Cable Lead-Through having Interconnected Layers", "A Pipe or Cable Lead-Through having Layers of Different Thickness", "Cohering Between Layers of a Pipe or Cable Lead-Through" and "Identification of Layers of a Pipe or Cable Lead-Through", filed by the applicant of the present application.

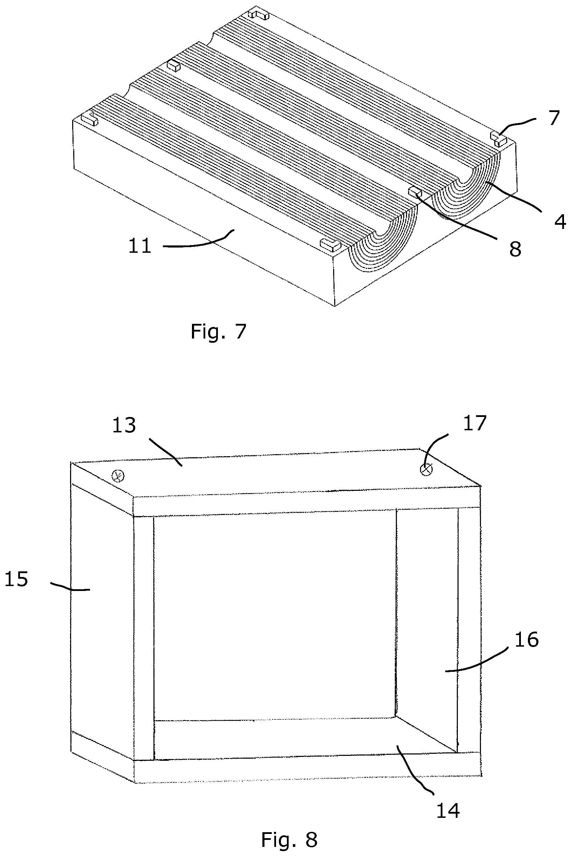

Often the structure of blocks 1-3, 11 is received inside a frame or the like holding the structure in position and possibly compressing the structure. The tightness of the structure will be improved by compressing. In Fig. 8 one example of a frame is shown, which frame may be used together with the structure of blocks 1-3, 11. The frame has an upper horizontal frame beam 13, a lower horizontal frame beam 14, a left vertical frame beam 15 and a right vertical frame beam 16. The stated positions of the different frame beams 13-16 are with reference to Fig. 8. A person skilled in the art realises that the frame may be mounted in other positions than as showed in Fig. 8. The upper horizontal frame beam 12 has two through openings at the ends. The trough openings are to receive one fixation screw 17 each. The fixation screws 17 go into one vertical frame beam 15, 16 each. In a corresponding way the lower horizontal frame beam has two through openings receiving fixation screws, which go into one vertical frame beam 15, 16 each. A structure of blocks is to be placed inside the frame formed of the upper horizontal frame beam 13, the lower horizontal frame beam 14, the left vertical frame beam 15 and the right vertical frame beam 16. The dimension of the frame may be altered, by replacing the horizontal and/or vertical frame beams 13-16 with frame beams of other lengths. In some embodiments (not shown) the blocks adjacent the frame are connected to the frame by means of co-operating protruding parts and openings. Thus, such blocks are connected to the frame in a similar way to the connection between the blocks.

In a further embodiment one or more of the horizontal and/or the vertical frame beams are received movable in relation to the other parts of the frame, thereby the inner dimension of the frame may be varied in a simple way.

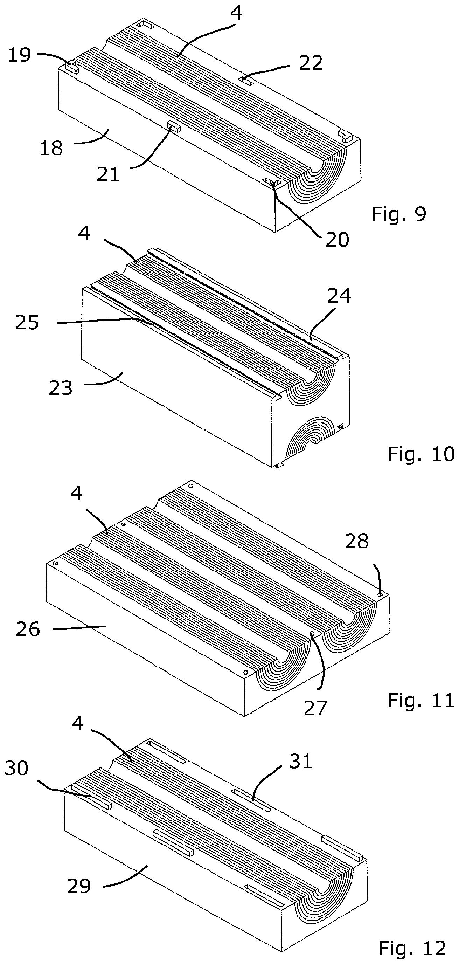

In Figs. 9-12 further examples of connection between the blocks are shown. A person skilled in the art realises that the exact form of the co-operating parts forming the mutual connection between the blocks may be varied in many ways and that the shown connecting parts may be combined in many different ways. For several of the shown examples the upper and lower blocks are identical. This is achieved in that the blocks are provided with alternating bosses and groves.

In the example of Fig. 9 a block 18 is shown. A number of peelable sheets 4 are placed in a semicylindrical recess of the block 18. The block 18 has protruding parts 19 having an L-form in two diagonally opposite corners and two L-formed openings 20 at the other two corners. Between the protruding parts 19 and openings 20, respectively, at the corners further protruding parts 21 and openings 22 are placed outside the recess holding the peelable sheets 4. These latter protruding parts 21 and openings 22 have an elongated form.

The block 23 shown in Fig. 10 has a protruding part in the form of a rail 24 and a co-operating part in the form of a groove 25 on two opposing sides, which rails 24 and grooves 25 extend across the block 23 in the thickness direction t. The rails 24 and grooves 25 are placed outside a semicylindrical recess receiving a number of peelable sheets 4. The rails 24 and grooves 25 have corresponding cross sections in form of a dovetail. By means of the dovetails two blocks 23 may be held together firmly in the height h direction of the blocks. Two connected blocks 23 are to be slid in relation to each other to connect or disconnect them. A person skilled in the art realises that it is possible to achieve them same effect with rails and grooves of many different cross section forms.

The block 26 of Fig. 11 has protruding parts or bosses 27 and openings 28 corresponding with the bosses 5 and openings 6 of the blocks 1, 2 shown in Figs. 3 and 4. However, in the embodiment of Fig. 11 the block 26 has alternating bosses 27 and openings 28 on the same side of the block 26.

The block 29 of Fig. 12 differs from the block 20 of Fig. 9 only in the form of the protruding parts 30 and the openings 31. In the block 29 of Fig. 12 the protruding parts 30 and the openings 31 all have an elongated form.

Also in the embodiments of Figs. 9-12 the protruding parts and co-operating parts have complementary forms and are held together in a tight fit.

A person skilled in the art realises that the different connection forms shown in Figs. 9-12 also could be used in possible connection between blocks and a frame.

In use a cable or pipe may be placed in each circular recess of the structure. If the number of cables or pipes to be received is less than the available recesses the blinds 12 of the recesses not used are kept in place. When a cable or pipe is to be received in a recess, the blocks 1-3, 11, forming said recess, are separated. Then the blind 12 is taken out and an appropriate number of sheets 4 are peeled off from respective block 1-3, 11. The number of sheets 4 peeled off should give an opening normally having an inner diameter being slightly smaller than the outer diameter of the cable or pipe received. As the sheets 4 are made of an elastic material the difference in diameter will be taken up by the sheets 4 remaining in respective block 1-3, 11. In some embodiments the blocks 1-3, 11 are made of an elastic material taking up the difference in diameter. The number of blocks 1-3, 11 used to form a structure of blocks is adapted to the size of an opening in which the structure of blocks is to be received. When all cables or pipes have been placed in the appropriate recesses the blocks are put together to form the structure of blocks, such as a wall. The formed structure of blocks is then pressed into the opening, whereby a tight lead-through is formed for the cables and/or pipes. The structure of blocks 1-3, 11 may be compressed somewhat at installation due to the elasticity of the peelable sheets 4 of the recesses of the blocks 1-3, 11 or the elasticity of the blocks 1-3, 11.

If the structure of blocks 1-3, 11 is to be received inside a frame of the type shown in Fig. 8, horizontal and vertical frame beams 13-16 of appropriate dimensions are chosen. The length of the horizontal frame beams 13, 14 is adapted to the width of the formed structure of blocks 1-3, 11 and the length of the vertical frame beams 15, 16 is adapted to the height of the formed structure of blocks 1-3, 11. When the structure of blocks 1-3, 11 has been placed inside the frame the fixation screws 17 are tightened in order to compress the structure of blocks 1-3, 11. As indicated above the peelable sheets 4 of each block 1-3, 11 are elastic and a compression given by means of the fixation screws 17 of the frame will enhance the tightening of the cable and/or pipe lead-throughs.

## Claims

1. A structure formed of a number of blocks (1, 2, 3, 11, 18, 23, 26, 29) having a generally rectangular shape and placed mutually adjacent to each other and on top of each other, which structure forms a cable or pipe transition for one or more cables or pipes, wherein the structure comprises upper blocks (1), lower blocks (2, 11, 18, 26, 29) and intermediate blocks (3, 23) placed between said upper and lower blocks (1, 2, 11, 18, 26, 29), wherein each block (1-3, 11, 18, 23, 26, 29) has at least one recess having a semicircular cross section form placed on one side of the block (1-3, 11, 18, 23, 26, 29) and extended all of the thickness of the block (1-3, 11, 18, 23, 26, 29), wherein each upper block (1) has at least one recess on a lower surface and an even upper surface, wherein each lower block (2, 11, 18, 26, 29) has at least one recess on an upper surface and an even lower surface, the semicircular recess of the blocks (1-3, 11, 18, 23, 26, 29) are placed in such a way that circular recesses are formed of two semicircular recesses when two blocks (1-3, 11, 18, 23, 26, 29) are placed on top of each other, and wherein a number of peelable sheets (4) are placed in the recesses, inside of which peelable sheets a cable or pipe is to be received, **characterized in that**
each intermediate block (3, 23) has at least one recess on lower and at least one recess on upper surfaces, that the blocks have means for fastening each block to a further block placed above or below the block (1-3, 11, 18, 23, 26, 29), which means are protruding parts (6, 7, 8, 19, 21, 27, 30) at one block (2, 3, 11, 18, 26, 29) and co-operating parts (5, 9, 10, 20, 22, 25, 28, 31) at an opposite block (1, 3, 18, 26, 29), that the protruding parts (6, 7, 8, 19, 21, 27, 30) and co-operating parts (5, 9, 10, 20, 22, 25, 28, 31) have complementary forms, that the protruding parts (6, 7, 8, 19, 21, 27, 30) are received in a tight fit in the co-operating parts (5, 9, 10, 20, 22, 25, 28, 31), and that at least one block (1-3, 11, 18, 23, 26, 29) has another width than the other blocks, whereby the blocks are placed in such a way that contact surfaces between two separate blocks are not placed on a continuous vertical line going through all of the formed structure from the lower surface of the lower blocks (2, 11, 18, 26, 29) to the upper surface of the upper blocks.

2. The structure of claim 1, wherein a number of said protruding parts (6, 7, 8, 19, 21, 27, 30) at one block (2, 3, 11, 18, 26, 29) co-operates with said co-operating parts formed as openings (5, 9, 10, 20, 22, 28, 31) at another block (1, 3, 18, 26, 29), to fasten two blocks to each other.

3. The structure of claim 2, wherein protruding parts (7, 19) placed at corners of a block (3, 11, 21) and openings (9, 20) placed at corners of a block (3, 18) each has two straight parts forming a right angle, giving the protruding parts (7, 19) and openings (9, 20) an L-form in plan view, and wherein protruding parts (8, 21) and corresponding openings (10, 22) placed between the protruding parts (7, 19) and openings (9, 20), respectively, at the corners have an elongated form.

4. The structure of claim 2, wherein the protruding parts (30) and the openings (31) have an elongated form.

5. The structure of claim 1, wherein the protruding parts are rails (24) on one block (23) co-operating with grooves (25) of another block (23), which rails (24) and grooves (25) extends all of the thickness of the block (23).

6. The structure of claim 5, wherein the rails (24) and grooves (25) have a dovetail form in cross section.

7. The structure of any of the previous claims, wherein the peelable sheets (4) adhere to each other loose enough for separate sheets to be peeled off by hand.

8. Arrangement comprising the structure of any of the preceding claims and a frame, wherein the structured is placed inside a frame.

9. The arrangement of claim 8, wherein the frame is formed of an upper horizontal frame beam (13), a lower horizontal frame beam (14), a left vertical frame beam (15) and a right vertical frame beam (16).

10. The arrangement of claim 9, wherein the frame beams (13-16) are fixed to each other by means of fixation screws.

11. The arrangement of claim 9, wherein one or more of the horizontal and/or the vertical frame beams (13-16) are received movable in relation to the other frame beams of the frame.

12. The arrangement according to any of the claims 8-11, wherein the frame is attached to the blocks (1-3, 11, 18, 23, 26, 29) by means of protruding parts on either the blocks or the frame and cooperating parts of the frame and blocks, respectively.

## Patentansprüche

1. Eine Struktur, die aus einer Anzahl von Blöcken (1,2, 3, 11, 18, 23, 26, 29) gebildet ist, die eine im Allgemeinen rechteckige Form aufweisen und nebeneinander und übereinander angeordnet sind, wobei die Struktur einen Kabel- oder Rohrdurchgang für ein oder mehrere Kabel oder Rohre bildet,
wobei die Struktur obere Blöcke (1), untere Blöcke (2, 11, 18, 26, 29) und Zwischenblöcke (3, 23) umfasst, die zwischen den oberen und unteren Blöcken (1, 2, 11, 18, 26, 29) angeordnet sind, wobei jeder Block (1-3, 11, 18, 23, 26, 29) mindestens eine Aussparung mit einer halbkreisförmigen Querschnittsform aufweist, die auf einer Seite des Blocks (1-3, 11, 18, 23, 26, 29) angeordnet ist und sich über die gesamte Dicke des Blocks (1-3, 11, 18, 23, 26, 29) erstreckt, wobei jeder obere Block (1) mindestens eine Aussparung auf einer Unterseite und eine ebene Oberseite aufweist, wobei jeder untere Block (2, 11, 18, 26, 29) mindestens eine Aussparung auf einer Oberseite und eine ebene Unterseite aufweist, wobei die halbkreisförmige Aussparung der Blöcke (1-3, 11, 18, 23, 26, 29) so angeordnet ist, dass kreisförmige Aussparungen aus zwei halbkreisförmigen Aussparungen gebildet werden, wenn zwei Blöcke (1-3), 11, 18, 23, 26, 29) übereinander angeordnet sind, und wobei eine Anzahl von abziehbaren Blättern (4) in den Aussparungen angeordnet sind, in denen ein Kabel oder Rohr aufzunehmen ist, **dadurch gekennzeichnet, dass**
jeder Zwischenblock (3, 23) mindestens eine Aussparung auf der Unterseite und mindestens eine Aussparung auf der Oberseite aufweist, dass die Blöcke Mittel zur Befestigung jedes Blocks an einem weiteren Block aufweisen, der über oder unter dem Block (1-3, 11, 18, 23, 26, 29) angeordnet ist, wobei es sich bei den Mitteln um vorstehende Teile (6, 7, 8, 19, 21, 27, 30) an einem Block (2, 3, 11, 18, 26, 29) und um zusammenwirkende Teile (5, 9, 10, 20, 22, 25, 28, 31) an einem gegenüberliegenden Block (1, 3, 18, 26, 29) handelt, dass die vorstehenden Teile (6, 7, 8, 19, 21, 27, 30) und die damit zusammenwirkenden Teile (5, 9, 10, 20, 22, 25, 28, 31)
komplementäre Formen aufweisen, dass die vorstehenden Teile (6,7,8,19,21,27,30) in einer engen Passung in den damit zusammenwirkenden Teilen (5,9,10,20,22,25,28,31) aufgenommen sind, und dass mindestens ein Block (1-3,11,18,23,26,29) eine andere Breite als die anderen Blöcke aufweist, wodurch die Blöcke auf eine solche Weise angeordnet sind, dass Kontaktflächen zwischen zwei getrennten Blöcken nicht auf einer durchgehenden vertikalen Linie angeordnet sind, die durch die gesamte gebildete Struktur von der Unterseite der unteren Blöcke (2, 11, 18, 26, 29) bis zur Oberseite der oberen Blöcke verläuft.

2. Struktur nach Anspruch 1, wobei eine Anzahl der vorstehenden Teile (6, 7, 8, 19, 21, 27, 30) an einem Block (2, 3, 11, 18, 26, 29) mit den zusammenwirkenden Teilen zusammenwirkt, die als Öffnungen (5, 9, 10, 20, 22, 28, 31) an einem anderen Block (1, 3, 18, 26, 29) ausgebildet sind, um zwei Blöcke miteinander zu verbinden.

3. Struktur nach Anspruch 2, wobei vorstehende Teile (7, 19), die an Ecken eines Blocks (3, 11, 21) angeordnet sind, und Öffnungen (9, 20), die an Ecken eines Blocks (3, 18) angeordnet sind, jeweils zwei gerade Teile aufweisen, die einen rechten Winkel bilden, wodurch die vorstehenden Teile (7, 19) und die Öffnungen (9, 20) in Draufsicht eine L-Form erhalten, und wobei vorstehende Teile (8, 21) und entsprechende Öffnungen (10, 22), die zwischen den vorstehenden Teilen (7, 19) und den Öffnungen (9, 20) angeordnet sind, jeweils an den Ecken eine längliche Form haben.

4. Struktur nach Anspruch 2, wobei die vorstehenden Teile (30) und die Öffnungen (31) eine längliche Form aufweisen.

5. Struktur nach Anspruch 1, wobei die vorstehenden Teile Schienen (24) auf einem Block (23) sind, die mit Nuten (25) eines anderen Blocks (23) zusammenwirken, wobei sich die Schienen (24) und Nuten (25) über die gesamte Dicke des Blocks (23) erstrecken.

6. Struktur nach Anspruch 5, wobei die Schienen (24) und Nuten (25) im Querschnitt eine Schwalbenschwanzform aufweisen.

7. Struktur nach einem der vorhergehenden Ansprüche, wobei die abziehbaren Blätter (4) lose genug aneinander haften, so dass getrennte Blätter von Hand abgezogen werden können.

8. Anordnung, umfassend die Struktur nach einem der vorhergehenden Ansprüche und einen Rahmen, wobei die Struktur in einem Rahmen angeordnet ist.

9. Anordnung nach Anspruch 8, wobei der Rahmen aus einem oberen horizontalen Rahmenbalken (13), einem unteren horizontalen Rahmenbalken (14), einem linken vertikalen Rahmenbalken (15) und einem leichten vertikalen Rahmenbalken (16) gebildet ist.

10. Anordnung nach Anspruch 9, wobei die Rahmenbalken (13-16) mittels Befestigungsschrauben aneinander befestigt sind.

11. Anordnung nach Anspruch 9, wobei einer oder mehrere der horizontalen und/oder vertikalen Rahmenbalken (13-16) in Bezug auf die anderen Rahmenträger des Rahmens beweglich aufgenommen sind.

12. Anordnung nach einem der Ansprüche 8-11, wobei der Rahmen an den Blöcken (1-3, 11, 18, 23, 26, 29) mittels vorstehender Teile entweder an den Blöcken oder an dem Rahmen oder an zusammenwirkenden Teilen des Rahmens und der Blöcke befestigt ist.

## Revendications

1. Structure formée d'un nombre de blocs (1, 2, 3, 11, 18, 23, 26, 29) ayant une forme généralement rectangulaire et placés mutuellement adjacents les uns aux autres et les uns par-dessus les autres, laquelle structure forme une transition de câble ou de tuyau pour un ou plusieurs câbles ou tuyaux, dans laquelle la structure comprend des blocs supérieurs (1), des blocs inférieurs (2, 11, 18, 26, 29) et des blocs intermédiaires (3, 23) placés entre lesdits blocs supérieurs et inférieurs (1, 2, 11, 18, 26, 29), dans laquelle chaque bloc (1 à 3, 11, 18, 23, 26, 29) a au moins un évidement ayant une forme en coupe semi-circulaire placé sur un côté du bloc (1 à 3, 11, 18, 23, 26, 29) et s'étendant sur toute l'épaisseur du bloc (1 à 3, 11, 18, 23, 26, 29), dans laquelle chaque bloc supérieur (1) présente au moins un évidement sur une surface inférieure et une surface supérieure plane, dans laquelle chaque bloc inférieur (2, 11, 18, 26, 29) a au moins un évidement sur une surface supérieure et une surface inférieure plane, l'évidement semi-circulaire des blocs (1 à 3, 11, 18, 23, 26, 29) est placé de manière à ce que des évidements circulaires soient formés de deux évidements semi-circulaires lorsque deux blocs (1 à 3, 11, 18, 23, 26, 29) sont placés l'un par-dessus l'autre, et dans laquelle un nombre de feuilles pelables (4) sont placées dans l'évidement, feuilles pelables à l'intérieur desquelles un câble ou un tuyau doit être reçu, **caractérisée en ce que**
chaque bloc intermédiaire (3, 23) présente au moins un évidement sur des surfaces inférieures et au moins un évidement sur des surfaces supérieures, **en ce que** les blocs ont des moyens pour fixer chaque bloc à un bloc supplémentaire placé au-dessus ou en dessous du bloc (1 à 3, 11, 18, 23, 26, 29), lesquels moyens sont des parties saillantes (6, 7, 8, 19, 21, 27, 30) au niveau d'un bloc (2, 3, 11, 18, 26, 29) et des parties coopérantes (5, 9, 10, 20, 22, 25, 28, 31) au niveau d'un bloc opposé (1, 3, 18, 26, 29), **en ce que** les parties saillantes (6, 7, 8, 19, 21, 27, 30) et les parties coopérantes (5, 9, 10, 20, 22, 25, 28, 31) présentent des formes complémentaires, **en ce que** les parties saillantes (6, 7, 8, 19, 21, 27, 30) sont reçues en ajustement serré dans les parties coopérantes (5, 9, 10, 20, 22, 25, 28, 31), et **en ce qu'**au moins un bloc (1 à 3, 11, 18, 23, 26, 29) présente une autre largeur que les autres blocs, moyennant quoi les blocs sont placés de manière à ce que des surfaces de contact entre deux blocs séparés ne soient pas placées sur une ligne verticale continue traversant la totalité de la structure depuis de la surface inférieure des blocs inférieurs (2, 11, 18, 26, 29) à la surface supérieure des blocs supérieurs.

2. Structure selon la revendication 1, dans laquelle un nombre desdites parties saillantes (6, 7, 8, 19, 21, 27, 30) au niveau d'un bloc (2, 3, 11, 18, 26, 29) coopèrent avec lesdites parties coopérantes formées en tant qu'ouvertures (5, 9, 10, 20, 22, 28, 31) au niveau d'un autre bloc (1, 3, 18, 26, 29), pour fixer deux blocs l'un à l'autre.

3. Structure selon la revendication 2, dans laquelle des parties saillantes (7, 19) placées au niveau de coins d'un bloc (3, 11, 21) et des ouvertures (9, 20) placées au niveau de coins d'un bloc (3, 18) présentent chacune deux parties droites formant un angle droit, donnant aux parties saillantes (7, 19) et aux ouvertures (9, 20) une forme de L dans une vue en plan, et dans laquelle des parties saillantes (8, 21) et des ouvertures correspondantes (10, 22) placées entre les parties saillantes (7, 19) et les ouvertures (9, 20), respectivement, au niveau des coins ont une forme allongée.

4. Structure selon la revendication 2, dans laquelle les parties saillantes (30) et les ouvertures (31) ont une forme allongée.

5. Structure selon la revendication 1, dans laquelle les parties saillantes sont des rails (24) sur un bloc (23) coopérant avec des gorges (25) d'un autre bloc (23), lesquels rails (24) et gorges (25) s'étendent sur toute l'épaisseur du bloc (23).

6. Structure selon la revendication 5, dans laquelle les rails (24) et les gorges (25) ont une forme en coupe en queue d'aronde.

7. Structure selon l'une quelconque des revendications précédentes, dans laquelle les feuilles pelables (4) adhèrent les unes aux autres de façon suffisamment lâche pour peler des feuilles séparées à la main.

8. Agencement comprenant la structure de l'une quelconque des revendications précédentes et un châssis, dans lequel la structure est placée à l'intérieur d'un châssis.

9. Agencement selon la revendication 8, dans lequel le châssis est formé d'une traverse de châssis horizontale supérieure (13), d'une traverse de châssis horizontale inférieure (14), d'une traverse de châssis verticale gauche (15) et d'une traverse de châssis verticale droite (16).

10. Agencement selon la revendication 9, dans lequel les traverses de châssis (13 à 16) sont fixées les unes aux autres au moyen de vis de fixation.

11. Agencement selon la revendication 9, dans lequel une ou plusieurs des traverses de châssis horizontales et/ou verticales (13 à 16) sont reçues mobiles par rapport aux autres traverses de châssis du châssis.

12. Agencement selon l'une quelconque des revendications 8 à 11, dans lequel le châssis est attaché aux blocs (1 à 3, 11, 18, 23, 26, 29) au moyen de parties saillantes soit sur les blocs soit sur le châssis et de parties coopérantes du châssis et des blocs, respectivement.
